# EUROPEAN PATENT SPECIFICATION

(11) **EP 2 888 840 B1**
(45) Date of publication and mention of the grant of the patent: **06.04.2016**
(21) Application number: 13833831.4
(22) Date of filing: 07.05.2013
(51) Int. Cl.: H04L 12/58, H04L 29/08, H04L 12/24

(54) **INFORMATION TRANSMISSION METHOD, APPARATUS, SYSTEM, AND TERMINAL**
VERFAHREN, VORRICHTUNG, SYSTEM UND ENDGERÄT ZUR INFORMATIONSÜBERTRAGUNG
PROCÉDÉ POUR LA TRANSMISSION DE DONNÉES, ET APPAREIL, SYSTÈME, ET TERMINAL CORRESPONDANTS

(30) Priority: 27.08.2012 CN 201210307882
(43) Date of publication of application: 01.07.2015
(73) Proprietor: Tencent Technology (Shenzhen) Company Limited, Shenzhen, Guangdong 518044 (CN)
(72) Inventor: ZHANG, Xiaolong, Shenzhen Guangdong 518044 (CN); RONG, Kunfeng, Shenzhen Guangdong 518044 (CN); CHEN, Wenxiao, Shenzhen Guangdong 518044 (CN); LIN, Zhiyuan, Shenzhen Guangdong 518044 (CN); YAO, Shaomian, Shenzhen Guangdong 518044 (CN); WENG, Leteng, Shenzhen Guangdong 518044 (CN); SUN, Xiao, Shenzhen Guangdong 518044 (CN)
(74) Representative: Gunzelmann, Rainer
(86) International application number: PCT/CN2013/075278
(87) International publication number: WO 2014/032438

(56) References cited:
- CN-A- 101 529 365
- CN-A- 102 110 119
- CN-A- 102 347 966
- CN-A- 102 833 186
- US-B1- 7 716 276
- ANDREW MAUNDER ET AL: "Creating and sharing multi-media packages using large situated public displays and mobile phones", PROCEEDINGS OF THE 9TH INTERNATIONAL CONFERENCE ON HUMAN COMPUTER INTERACTION WITH MOBILE DEVICES AND SERVICES, 1 January 2007 (2007-01-01), pages 222-225, XP055198803, DOI: 10.1145/1377999.1378010 ISBN: 978-1-59-593862-6
- Matt Johnson: "WeChat Adds Web Grab Feature, Positioning for the Trend from PC to Mobile", , 9 November 2012 (2012-11-09), XP055198229, Retrieved from the Internet: URL:http://blog.thegmic.com/2012/11/09/wec hat-adds-webgrab-feature-leapfrogging-tren d-pc-mobile/8157 [retrieved on 2015-06-25]

## Description

### TECHNICAL FIELD

The disclosed implementations relate generally to the field of Internet technologies, and in particular, to the field of information transmission technologies, and specifically, to an information transmission method, apparatus, system, and terminal.

### BACKGROUND

With the development of the Internet and terminal technologies, people can obtain information by using the Internet, for example, browse web webpage information by using a browser in a PC (Personal Computer); and people can also experience various applications of a terminal, for example, experience an instant communication application in a mobile phone. If a user browses a web page by using a browser of a PC, and intends to use the web page in an instant communication application in a mobile phone, a conventional solution may be that: the user stores information of the web page locally, copies the information to the mobile phone by using a storage medium such as a USB flash drive, and invokes the information in the instant communication application of the mobile phone; or the PC end uploads the information to a cloud server, the mobile phone end then logs in the cloud server, downloads the information from the cloud server, and invokes the information in the instant communication application.

Maunder, A et. al., "Creating and sharing multi-media packages using large situated public displays and mobile phones", In: PROCEEDINGS OF THE 9TH INTERNATIONAL CONFERENCE ON HUMAN COMPUTER INTERACTION WITH MOBILE DEVICES AND SERVICES, 1.1.2007 discloses an interaction technique that allows mobile phone users to create and share contextualised media packages between their personal Bluetooth-enabled terminals and respective public displays.

In the development trend of information exchange, due to complex operations, the conventional information transmission solutions fail to satisfy actual requirements on the convenience of information transmission of users. How to improve the convenience of information transmission becomes a technical problem urgent to be solved.

### SUMMARY

Embodiments of the present invention provide an information transmission method according to claim 1 for a first mobile terminal, a corresponding information transmission method according to claim 7 for a second terminal, and a corresponding first mobile terminal according to claim 12.

By implementing the embodiments of the present invention, the following beneficial effects are obtained.

In the embodiments of the present invention, the plug-in grabs, according to the information transmission instruction from the terminal bound to the plug-in, the webpage information of the current web page in the browser where the plug-in is located, processes the webpage information, and returns the processed webpage information to the terminal, so as to implement information transmission between the plug-in in the browser and the terminal that are bound to each other, thereby improving the convenience of information transmission.

### BRIEF DESCRIPTION OF DRAWINGS

The aforementioned implementation of the invention as well as additional implementations will be more clearly understood as a result of the following detailed description of the various aspects of the invention when taken in conjunction with the drawings. Like reference numerals refer to corresponding parts throughout the several views of the drawings.
FIG. 1 is a flow chart of an information transmission method according to an embodiment of the present invention;
FIG. 2 is a flow chart of another information transmission method according to an embodiment of the present invention;
FIG. 3 is a flow chart of still another information transmission method according to an embodiment of the present invention;
FIG. 4 is a flow chart of still another information transmission method according to an embodiment of the present invention;
FIG. 5A is a first schematic diagram of the effect of an information transmission method according to an embodiment of the present invention;
FIG. 5B is a second schematic diagram of the effect of the information transmission method according to the embodiment of the present invention;
FIG. 5C is a third schematic diagram of the effect of the information transmission method according to the embodiment of the present invention;
FIG. 5D is a fourth schematic diagram of the effect of the information transmission method according to the embodiment of the present invention;
FIG. 5E is a fifth schematic diagram of the effect of the information transmission method according to the embodiment of the present invention;
FIG. 5F is a sixth schematic diagram of the effect of the information transmission method according to the embodiment of the present invention;
FIG. 5G is a seventh schematic diagram of the effect of the information transmission method according to the embodiment of the present invention;
FIG. 5H is an eighth schematic diagram of the effect of the information transmission method according to the embodiment of the present invention;
FIG. 5I is a ninth schematic diagram of the effect of the information transmission method according to the embodiment of the present invention;
FIG. 5J is a tenth schematic diagram of the effect of the information transmission method according to the embodiment of the present invention;
FIG. 6 is a schematic structural diagram of an information transmission apparatus according to an embodiment of the present invention;
FIG. 7 is a schematic structural diagram of an embodiment of an information processing module shown in FIG. 6;
FIG. 8 is a schematic structural diagram of another information transmission apparatus according to an embodiment of the present invention;
FIG. 9 is a schematic structural diagram of a terminal according to an embodiment of the present invention;
FIG. 10 is a schematic structural diagram of an embodiment of a management module shown in FIG. 9;
FIG. 11 is a schematic structural diagram of another terminal according to an embodiment of the present invention;
FIG. 12 is a schematic structural diagram of still another terminal according to an embodiment of the present invention;
FIG. 13 is a schematic structural diagram of an embodiment of a binding module shown in FIG. 12; and
FIG. 14 is a schematic structural diagram of an information transmission system according to an embodiment of the present invention.

### DETAILED DESCRIPTION

The technical solutions in the embodiments of the present invention following clearly and completely described below the with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

In the embodiments of the present invention, a plug-in is a program written by an application interface following a certain criteria, and after the plug-in is installed, an information transmission process may be performed by using the plug-in. A terminal may include intelligent equipment such as a PC, a tablet computer, a mobile phone, a PDA (Personal Digital Assistant), an e-reader, a notebook computer, and a vehicle-mounted terminal.

In the embodiments of the present invention, a first mobile terminal may be a terminal of any type, and preferably be a mobile terminal that can monitor, through a built-in gravity sensor, an action of shaking the first mobile terminal by a user to generate a gravity sensing event, or a mobile terminal that can monitor voice information input by the user to form a voice control command, or a mobile terminal that is set with a particular key, including a particular icon key or a particular physical key, and can monitor an action of clinking on the particular key by the user to generate a predefined key pressing event. A second terminal may be a terminal of any type, which is installed with a browser, used to browse a web page of the Internet, and may be used to load the plug-in. Unless otherwise stated, in the following embodiments, a browser where the plug-in is located refers to the browser where the plug-in is loaded in the second terminal.

In the embodiments of the present invention, the plug-in and the first mobile terminal are bounded to each other through binding ingress information of the plug-in and account information of the first mobile terminal. The ingress information of the plug-in includes address information and identification information of the plug-in. The address information includes a URL (Uniform/Universal Resource Locator) address of the plug-in or a storage address of the plug-in. The identification information is used for uniquely identifying the plug-in, and the identification information may be an ID (Identity) or a sequence number of the plug-in. The account information is preferably user account information of an application of the first mobile terminal, for example, user account information for logging in an instant communication application in the first mobile terminal.

To protect the account privacy of a user, preferably, one plug-in is only bound to one piece of account information of the first mobile terminal at the same time; and the user may remove, in a setting interface of the first mobile terminal, binding between the plug-in and the user account information of the first mobile terminal, or modify the account information bound to the plug-in. It should be noted that, after receiving information transmitted by the plug-in, the first mobile terminal may display the information in a built-in browser of the application of the first mobile terminal, or share the information with other terminal users or other applications of the first mobile terminal.

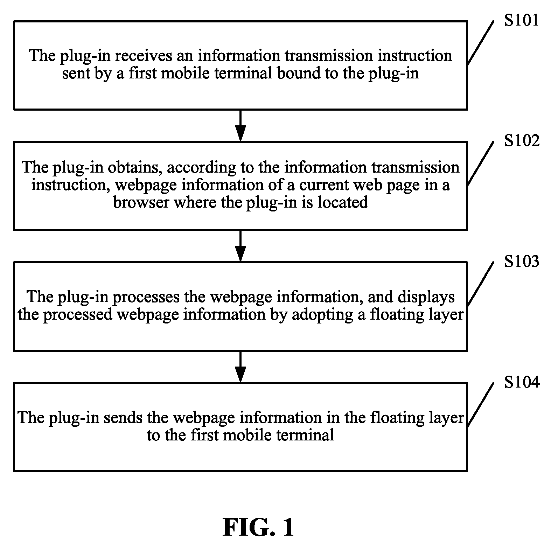

An information transmission method according to an embodiment of the present invention is described in detail in the following with reference to FIG. 1 to FIG. 5.

Referring to FIG. 1, FIG. 1 is a flow chart of an information transmission method according to an embodiment of the present invention. In the method, an information transmission process is performed by a plug-in pre-installed in a browser of a second terminal. The method may include step S101 to step S104.

S101: The plug-in receives an information transmission instruction sent by a first mobile terminal bound to the plug-in.

In this step, the information transmission instruction may be an instruction sent by the first mobile terminal according to a gravity sensing event. For example, the first mobile terminal detects a gravity sensing event generated by a user shaking the terminal, and sends the generated information transmission instruction to the plug-in, to instruct the plug-in to perform information transmission. In this case, preferably, the first mobile terminal has a built-in gravity sensor, for example, a speed sensor, an acceleration sensor, or a gyroscope sensor, and generates a gravity sensing event according to a signal detecting result of the sensor. Or, the information transmission instruction may also be an information transmission instruction sent by the first mobile terminal according to a voice control command. For example, the first mobile terminal detects voice information input by the user, and if the voice information is a preset voice control command, the first mobile terminal generates the information transmission instruction and sends the information transmission instruction to the plug-in, to instruct the plug-in to perform information transmission. In this case, preferably, the first mobile terminal pre-stores a voice control command used for instructing information transmission, and when the voice information of the user is detected, determines whether the voice information is matched with (namely, is the same as or similar to) the preset voice control command. Or, the information transmission instruction may also be an instruction sent by the first mobile terminal according to a predefined key pressing event. For example, the user of the first mobile terminal clicks on a particular key on the first mobile terminal, so that a predefined key pressing event is generated. The first mobile terminal generates the information transmission instruction and sends the information transmission instruction to the plug-in, to instruct the plug-in to perform information transmission. In this case, preferably, the first mobile terminal is preset with a particular key, including a particular icon key or a particular physical key.

S102: The plug-in obtains, according to the information transmission instruction, webpage information of a current web page in a browser where the plug-in is located.

The webpage information includes: address information of the current web page and information of images in the current web page. In this step, after receiving the information transmission instruction sent by the first mobile terminal bound to the plug-in, the plug-in grabs the address information of the current web page in the browser where the plug-in is located and the information of images in the current web page.

S103: The plug-in processes the webpage information, and displays the processed webpage information by adopting a floating layer.

The following implementation manners may be adopted in this step.

### First implementation manner

Step a: The plug-in selects images having a minimum side length larger than a preset value from the current web page.

Abundant information of images may exist in the current web page, for example, information of images of a main body of the web page, advertisement information of images of a floating window in the web page, or advertisement information of images displayed in edges of the web page. Generally, the side length of the advertisement information of images in the web page is small. In this step, the images having a minimum side length larger than the preset value may be selected from the current web page, so that the advertisement information of images in the current web page may be filtered off. It should be noted that, the preset value may be set according to actual conditions. For example, the preset value may be set to 100 pixels, or a value of a maximum side length in the advertisement information of images, or a value larger than that of the maximum side length in the advertisement information of images, or the like.

Step b: Compress the selected information of images, to form a thumbnail.

Step c: Display the thumbnail by using a floating layer. In this step, the plug-in may display the thumbnail by using the floating layer in many manners. For example, the thumbnail may be displayed in the floating layer in a cascading manner, or in a list, or in a nine-block box.

### Second implementation manner

Step d: The plug-in selects images in a preset format from the current web page.

The current web page may include information of images in multiple formats, for example, information of images in the JPEG (Joint Photographic Experts Group) format, information of images in the BMP (Bitmap) format, information of images in the GIF (Graphics Interchange Format) format, information of images in the TIF (Tagged Image File Format) format, and the like. The user of the first mobile terminal may set the format of information of images to be transmitted according to actual requirements. In this step, the information of images of the current web page may be selected according to the format set by the user.

Step e: Compress the selected information of images, to form a thumbnail.

Step f: Display the thumbnail by using a floating layer.

For steps e to f in this implementation manner, reference may be made to steps b to c of the foregoing implementation manner, which are not described here again.

S104: The plug-in sends the webpage information in the floating layer to the first mobile terminal.

The user may select a desired thumbnail in the floating layer for transmission, and after selecting the thumbnail, the user may trigger the plug-in to perform this step. For example, a send key is provided in the floating layer, and the user clicks on the send key to trigger the plug-in to perform this step. In this step, the plug-in sends, according to a selection operation of the user on the thumbnail displayed in the floating layer, the thumbnail selected by the user and the address information of the current web page to the first mobile terminal. Specifically, the plug-in may adopt the following implementation manners in the sending process.

In a first implementation manner, the plug-in may establish a communication connection such as an NFC (Near Field Communication) communication connection, a bluetooth communication connection, or a Wifi (wireless-fidelity) communication connection with the first mobile terminal. By using the established communication connection, the plug-in sends the webpage information in the floating layer to the first mobile terminal.

In a second implementation manner, the plug-in may forward the webpage information in the floating layer to the first mobile terminal through a server, which specifically includes that: the plug-in may transmit the webpage information in the floating layer to the server, and the server forwards the webpage information in the floating layer to the first mobile terminal.

For the convenience of information transmission, before sending the webpage information in the floating layer, the plug-in may process the webpage information, for example, may compress and encapsulate the thumbnail selected by the user and the address information of the current web page, so as to improve the efficiency of information transmission. It can be understood that, after receiving the processed webpage information in the floating layer, the first mobile terminal correspondingly decapsulates and decompresses the webpage information.

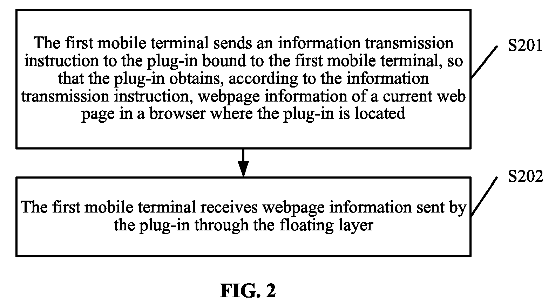

Referring to FIG. 2, FIG. 2 is a flow chart of another information transmission method according to an embodiment of the present invention. In the method, an information transmission process is performed by a first mobile terminal bound to a plug-in of a browser of a second terminal. The method may include step S201 to step S202.

S201: The first mobile terminal sends an information transmission instruction to the plug-in bound to the first mobile terminal, so that the plug-in obtains, according to the information transmission instruction, webpage information of a current web page in a browser where the plug-in is located.

The following implementation manners may be adopted in this step.

In a first implementation manner, the first mobile terminal preferably includes a gravity sensor. The gravity sensor may be a speed sensor, an acceleration sensor, or a gyroscope sensor, configured to monitor a gravity sensing event in the first mobile terminal. Before this step is performed, the first mobile terminal detects a gravity sensing event in real time, and sends, according to the detected gravity sensing event, an information transmission instruction to the plug-in bound to the first mobile terminal, to instruct the plug-in to obtain, according to the information transmission instruction, the webpage information of the current web page in the browser where the plug-in is located. For example, if a user of the first mobile terminal intends to apply the webpage information of the current web page in the browser where the plug-in is located in an instant communication application of the first mobile terminal, the user may shake the first mobile terminal in an interface of the instant communication application to generate a gravity sensing event, so as to trigger the first mobile terminal to perform this step.

In a second implementation manner, the first mobile terminal pre-stores a voice control command used for instructing the information transmission. Before this step is performed, the first mobile terminal detects voice information input by the user in real time, compares the detected voice information with the preset voice control command, and if the two are matched (namely, are the same or similar), sends an information transmission instruction to the plug-in bound to the first mobile terminal, to instruct the plug-in to obtain, according to the information transmission instruction, the webpage information of the current web page in the browser where the plug-in is located. For example, the user of the first mobile terminal inputs voice information "information transmission" to the first mobile terminal, and if the first mobile terminal determines that the voice information is matched with the preset voice control command "information transmission", the first mobile terminal is triggered to perform this step.

In a third implementation manner, the first mobile terminal is preferably set with a particular key, which may include a particular icon key or a particular physical key. The first mobile terminal detects a predefined key pressing event in real time, and sends, according to the detected predefined key pressing event, an information transmission instruction to the plug-in bound to the first mobile terminal, to instruct the plug-in to obtain, according to the information transmission instruction, the webpage information of the current web page in the browser where the plug-in is located. For example, the user of the first mobile terminal clicks on a particular icon key on the first mobile terminal, and a predefined key pressing event is generated, the first mobile terminal is triggered to perform this step.

S202: The first mobile terminal receives the webpage information sent by the plug-in through the floating layer.

Before this step is performed, the user of the first mobile terminal may select a thumbnail from the webpage information displayed in the floating layer. In this step, the webpage information received by the first mobile terminal includes address information of the current web page of the browser where the plug-in is located and the thumbnail selected by the user.

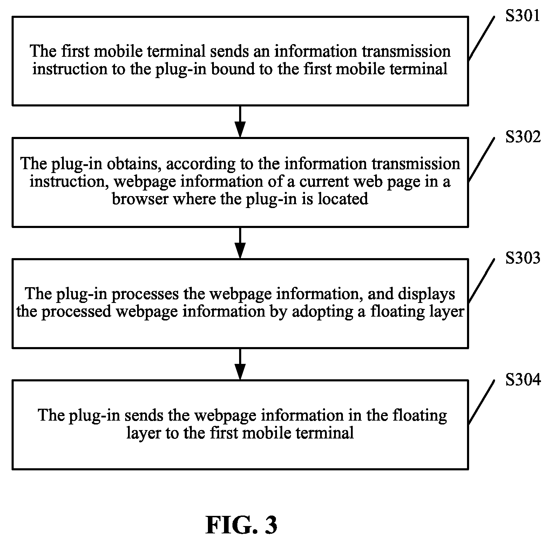

Referring to FIG. 3, FIG. 3 is a flow chart of still another information transmission method according to an embodiment of the present invention. In the method, an information transmission process is performed through interaction between a plug-in of a browser of a second terminal and a first mobile terminal bound to the plug-in. The method may include step S301 to step S304.

S301: The first mobile terminal sends an information transmission instruction to the plug-in bound to the first mobile terminal.

For step S301 in this embodiment, reference may be made to step S201 shown in FIG. 2, which is not described here again.

S302: The plug-in obtains, according to the information transmission instruction, webpage information of a current web page in a browser where the plug-in is located.

S303: The plug-in processes the webpage information, and displays the processed webpage information by adopting a floating layer.

S304: The plug-in sends the webpage information in the floating layer to the first mobile terminal.

For steps S302 to S304 in this embodiment, reference may be made to step S102 to step S104 shown in FIG. 1, which are not described here again.

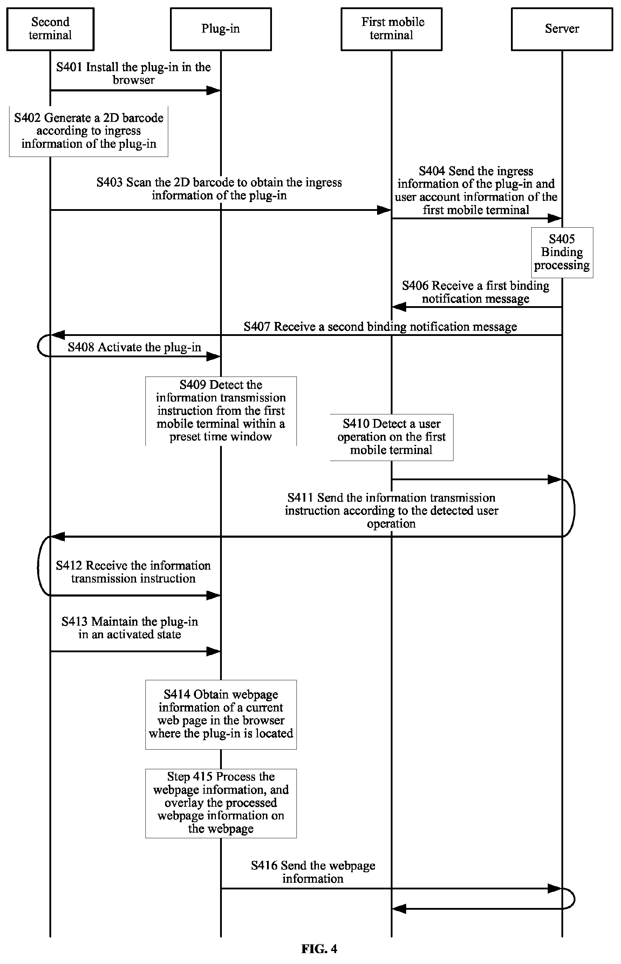

Referring to FIG. 4, FIG. 4 is a flow chart of still another information transmission method according to an embodiment of the present invention. In the method, an information transmission process is performed through interaction between a second terminal, a plug-in of a browser of the second terminal, a first mobile terminal bound to the plug-in, and a server. The method may include step S401 to step S416.

S401: The second terminal installs the plug-in in the browser.

The second terminal may download installation information of the plug-in to a local end, and install the plug-in in the browser by using installation information of the local end; or the second terminal may access the Internet, to obtain the installation information of the plug-in online, and load the plug-in in the browser.

S402: The second terminal generates a 2D barcode according to ingress information of the plug-in.

S403: The first mobile terminal scans and parses the 2D barcode, to obtain the ingress information of the plug-in.

The first mobile terminal may use scanning software in the first mobile terminal, to scan and parse the 2D barcode, and obtain the ingress information of the plug-in. The first mobile terminal may also use a scanning plug-in in an application of the first mobile terminal, for example, use a 2D barcode scanning plug-in in an instant communication application of the first mobile terminal, to scan and parse the 2D barcode.

S404: The first mobile terminal sends the ingress information of the plug-in and user account information associated with the first mobile terminal to a user account binding server for binding the user account (and the first mobile terminal) to the plug-in.

S405: The server performs binding processing according to the ingress information of the plug-in and the user account information associated with the first mobile terminal.

S406: The first mobile terminal receives a first binding notification message delivered by the server, where the first binding notification message includes the ingress information of the plug-in bound to the first mobile terminal.

S407: The plug-in at the second terminal receives a second binding notification message delivered by the server, where the second binding notification message includes the user account information of the first mobile terminal bound to the plug-in.

S408: The second terminal activates the plug-in.

After the plug-in and the first mobile terminal are bound to each other, the user may click on the plug-in installed in the browser of the second terminal. The second terminal activates the plug-in according to the click operation of the user. The plug-in then performs an information transmission process in an activated state.

S409: The plug-in detects whether the information transmission instruction from the first mobile terminal is received within a preset time window, and if yes, step S412 is performed; if no, the second terminal deactivates the plug-in.

The preset time window may be set according to actual requirements. For example, the preset time window may be set to 2 hours, 3 hours, or the like. Setting the preset time window may protect the privacy of the user, and prevent unnecessary information transmission form revealing browsing privacy on web pages and use privacy on applications of the first mobile terminal of the user. It can be understood that, after the second terminal deactivates the plug-in, if the information transmission process needs to be re-initiated, the user needs to click on the plug-in manually to trigger the second terminal to re-activate the plug-in.

S410: The first mobile terminal detects a user operation on the first mobile terminal, including a gravity sensing event, a voice control command, or a predefined key pressing event.

S411: The first mobile terminal sends the information transmission instruction according to the detected user operation to the plug-in at the second terminal through the server.

In this step, if the first mobile terminal detects a gravity sensing event, the first mobile terminal sends the information transmission instruction to the plug-in according to the detected gravity sensing event. Or, if the first mobile terminal detects a voice control command, the first mobile terminal sends the information transmission instruction to the plug-in according to the detected voice control command. Or, if the first mobile terminal detects a predefined key pressing event, the first mobile terminal sends the information transmission instruction to the plug-in according to the detected predefined key pressing event.

In this embodiment, step S409 and steps S410 to S411 can be performed in parallel, namely, steps S410 to S411 may be performed first, and then step S409 is performed; or step S409 and steps S410 to S411 are performed simultaneously.

S412: The plug-in receives the information transmission instruction sent by the first mobile terminal.

S413: The second terminal maintains the plug-in in an activated state.

S414: The plug-in obtains webpage information of a current web page in the browser where the plug-in is located.

Step 415: The plug-in processes the webpage information and overlays the processed webpage information on top of the current webpage in the browser.

S416: The plug-in sends the webpage information to the first mobile terminal.

In this step, for step S412 to step S416, reference may be made to step S101 to step S 104 in the embodiment shown in FIG. 1, which are not described here again.

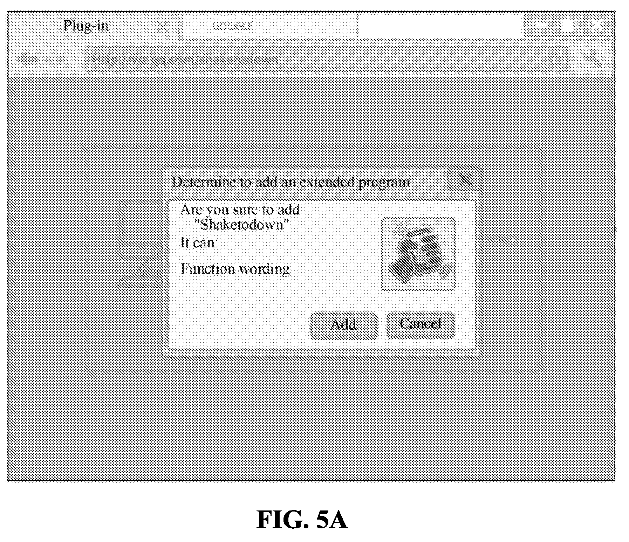

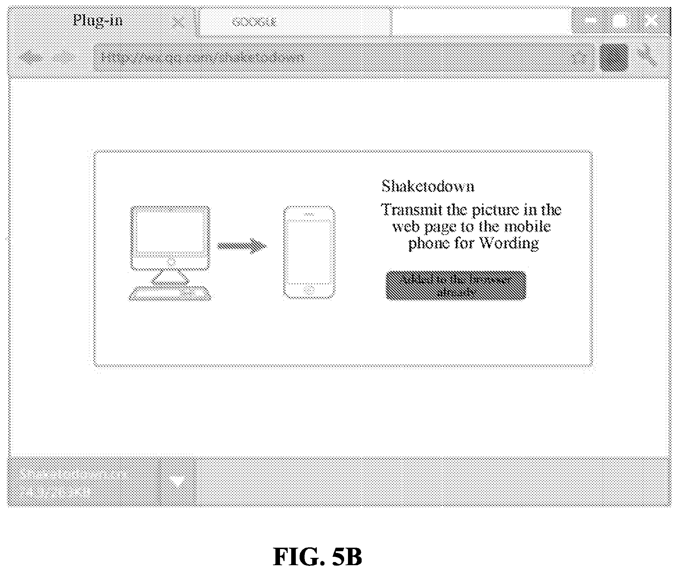

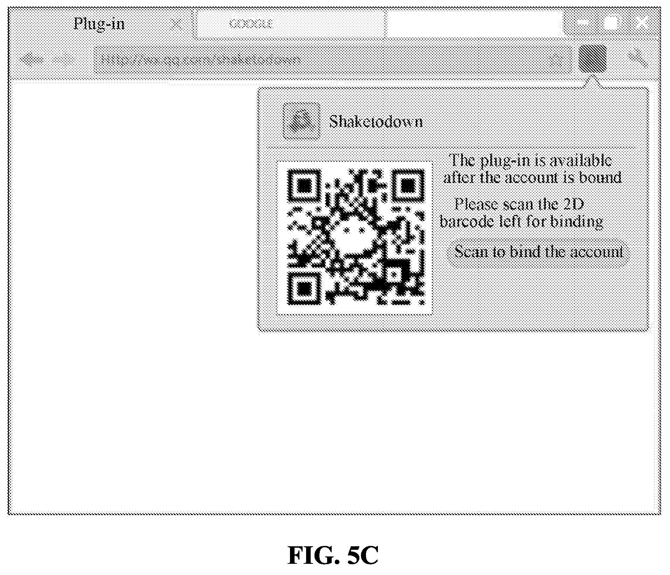

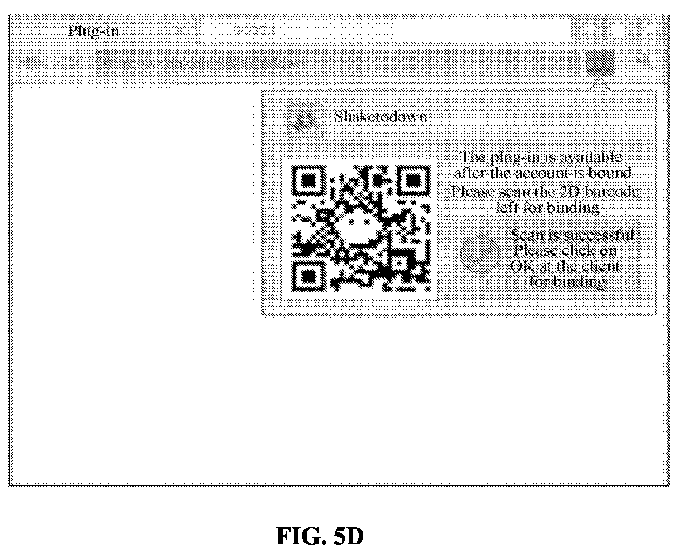

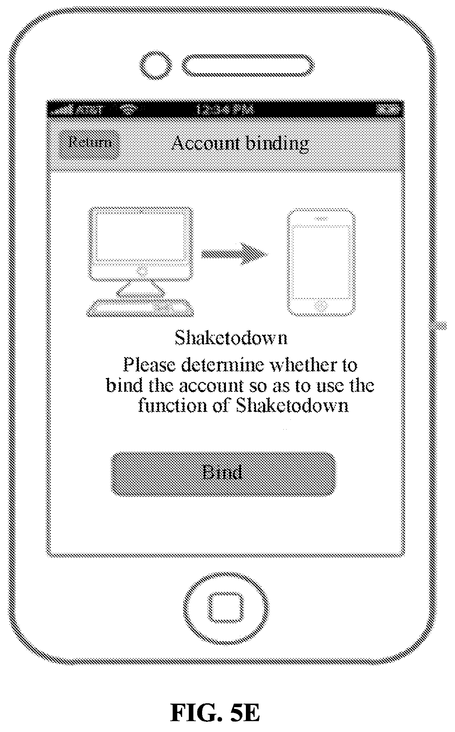

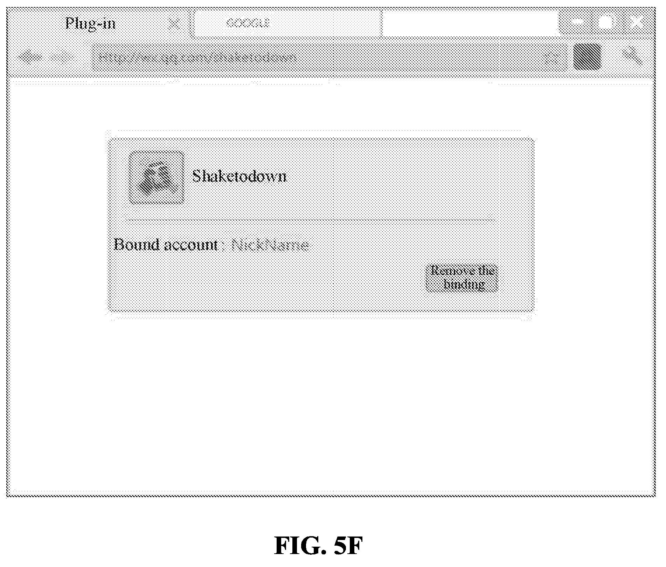

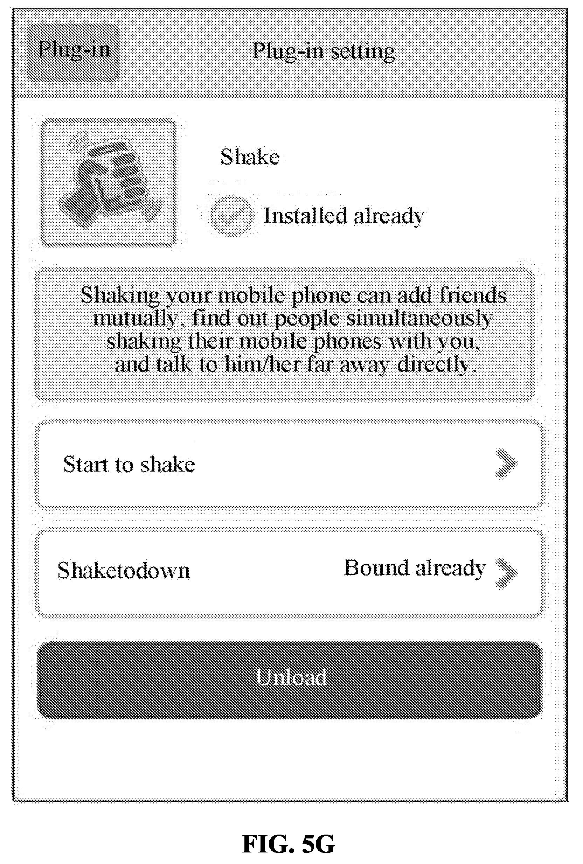

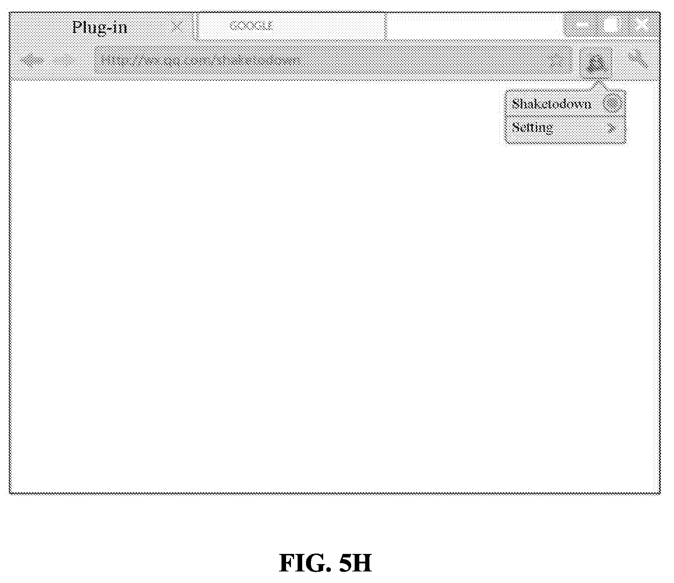

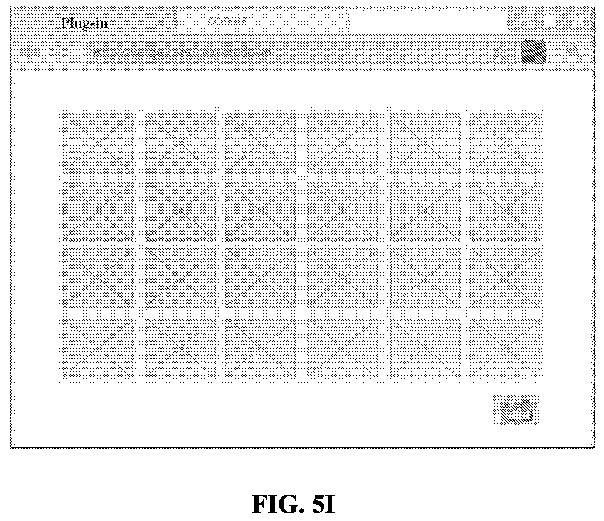

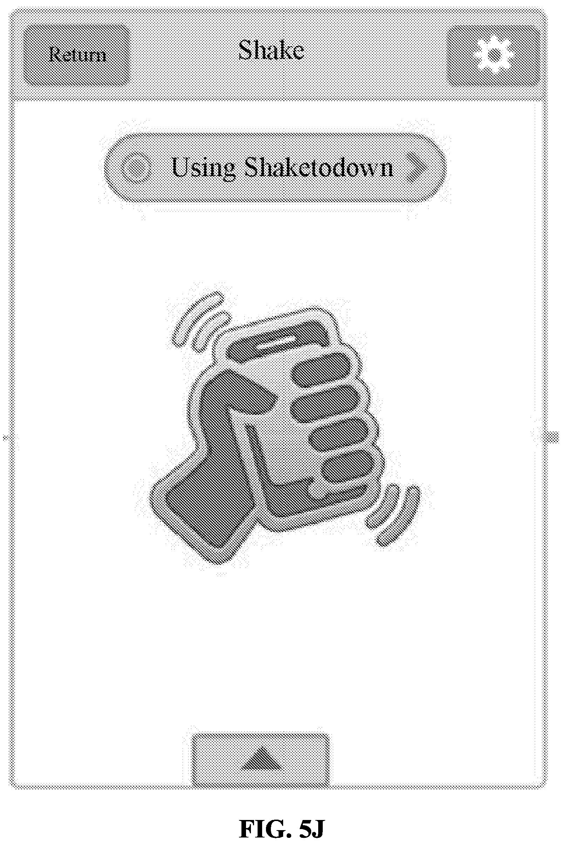

In the following, the information transmission method is described with a specific example with reference to FIG. 5.

FIG. 5A to FIG. 5J are diagrams of the effect of an information transmission method according to an embodiment of the present invention. In FIG. 5, transmitted information is address information and information of images of a current web page in a browser of a PC. FIG. 5 shows a process of performing transmission between the PC and a mobile phone is performed through "shake" of the mobile phone (namely, through an information transmission instruction sent according to a gravity sensing event generated by shaking the mobile phone).

It is assumed that a first mobile terminal is the mobile phone, and a second terminal is the PC. A user uses the browser of the PC to browse a web page, and at the same time, uses an instant communication application in the mobile phone. It is assumed that the user intends to transmit the address information and information of images of the current web page between the PC and the mobile phone, so as to use the information of images of the web page in the instant communication application of the mobile phone. A process of "Shaketodown" shown in FIG. 5 is as follows.

As shown in FIG. 5A to FIG. 5C, the PC loads the plug-in in the browser, and generates a 2D barcode according to ingress information of the plug-in. As shown in FIG. 5D, the mobile phone scans and parses the 2D barcode, to obtain the ingress information of the plug-in. Referring to FIG. 5E, when the user clicks on the key "bind" in the mobile phone, the mobile phone sends the ingress information of the plug-in and account information of the user for logging in the instant communication application to the server together for binding. The plug-in of the PC and the mobile phone respectively receive a binding notification message returned by the server, so as to obtain information of the two parties in binding. As shown in FIG. 5F to FIG. 5G, after the plug-in and the account information of the mobile phone are bound to each other, a prompt is made respectively in the browser of the PC and the mobile phone. The PC activates the plug-in according to a clicking operation of the user on the plug-in. As shown in FIG. 5H, the activated plug-in may execute the "Shaketodown".

At the mobile phone end, the mobile phone detects in real time whether a gravity sensing event generated by shaking the mobile phone exists in an interface of the instant communication application, and if yes, sends an information transmission instruction to the plug-in. At the PC end, the plug-in detects whether the information transmission instruction sent by the mobile phone is received within a preset time window, and if no, the PC deactivates the plug-in, and waits for a next clicking operation on the plug-in by the user for triggering the PC to activate the plug-in; if yes, the PC maintains the plug-in in an activated state, and the plug-in grabs the address information and the information of images of the current web page in the browser. As shown in FIG. 5I, the plug-in processes the information of images to form thumbnails, and displays the thumbnails in a pop-up floating layer in the browser. The user may select a desired thumbnail in the floating layer for transmission and click on the send key, and the plug-in sends the thumbnail selected by the user and the address information of the current web page together to the mobile phone. Preferably, the floating layer further includes a cancel key. The user of the mobile phone may cancel the information transmission process by clicking on the cancel key in the floating layer. As shown in FIG. 5J, the mobile phone may output an information transmission prompt message, to prompt the user about a state of information transmission. The mobile phone may display the received web page or information of images on the web page in the instant communication application, and may share the received web page or information of images on the web page in an application such as a microblog application, a short message application, and an SNS (Social Networking Services) in the mobile phone.

After the information transmission process is completed, if the plug-in is maintained in an activated state, a next information transmission process may be entered; and the user may also click on the plug-in to trigger the PC to deactivate the plug-in.

In the embodiment of the present invention, the plug-in grabs, according to the information transmission instruction from the terminal bound to the plug-in, the webpage information of the current web page in the browser where the plug-in is located, processes the webpage information, and returns the processed webpage information to the terminal, so as to implement information transmission between the plug-in in the browser and the terminal that are bound to each other, thereby improving the convenience of information transmission and the simplicity of operations of the user.

An embodiment of the present invention discloses a computer storage medium. The computer storage medium stores a program. When being executed, the program includes a part or all of steps of the information transmission methods in the embodiments shown in FIG. 1 to FIG. 5.

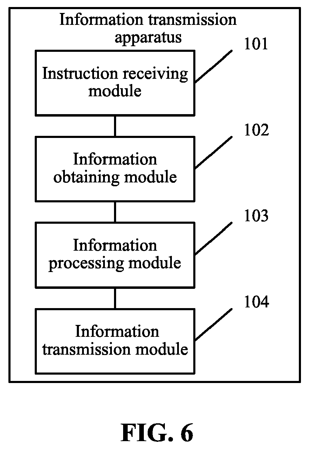

With reference to FIG. 6 to FIG. 8, an information transmission apparatus according to an embodiment of the present invention is described in detail below. It can be understood that, the apparatus can be applied in the methods shown in FIG. 1 to FIG. 5.

Referring to FIG. 6, FIG. 6 is a schematic structural diagram of an in information transmission apparatus according to an embodiment of the present invention. The information transmission apparatus includes one or more processors for executing modules, programs and/or instructions stored in memory and thereby performing predefined operations; one or more network or other communications interfaces; and one or more communication buses for interconnecting these components. In some implementations, the information transmission apparatus includes a user interface comprising a display device and one or more input devices (e.g., keyboard or mouse). In some implementations, the memory includes high-speed random access memory, such as DRAM, SRAM, or other random access solid state memory devices. In some implementations, memory includes non-volatile memory, such as one or more magnetic disk storage devices, optical disk storage devices, flash memory devices, or other non-volatile solid state storage devices. Memory, or alternately one or more storage devices (e.g., one or more nonvolatile storage devices) within memory, includes a non-transitory computer readable storage medium. In some implementations, memory or the computer readable storage medium of memory stores a plug-in pre-installed in a browser of a second terminal, and the plug-in further includes an instruction receiving module 101, an information obtaining module 102, an information processing module 103, and an information transmission module 104.

The instruction receiving module 101 is configured to receive an information transmission instruction from a first mobile terminal bound to the information transmission apparatus.

The information obtaining module 102 is configured to obtain, according to the information transmission instruction, webpage information of a current web page in a browser where the information transmission apparatus is located.

The webpage information includes address information of the current web page and information of images in the current web page. In this step, the information obtaining module 102 may grab the address information of the current web page in the browser where the plug-in is located and the information of images in the current web page.

The information processing module 103 is configured to process the webpage information, and display the processed webpage information by adopting a floating layer.

A process of processing and displaying the webpage information by the information processing module 103 may include two implementation manners. For the two feasible implementation manners, reference may be made to relevant description in step S103 shown in FIG. 1, which is not described here again.

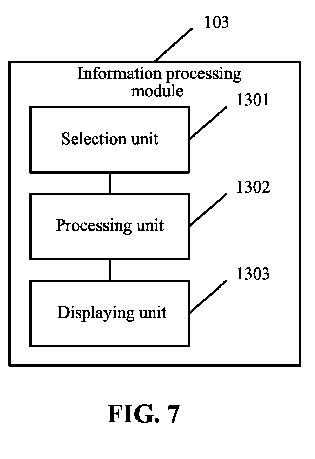

Specifically, referring to FIG. 7 together, FIG. 7 is a schematic structural diagram of an embodiment of the information processing module shown in FIG. 6. The information processing module 103 may include a selection unit 1301, a processing unit 1302, and a displaying unit 1303.

The selection unit 1301 is configured to select images having a minimum side length larger than a preset value from the current web page, or images in a preset format from the current web page.

The processing unit 1302 is configured to compress the selected information of images, to form a thumbnail.

The displaying unit 1303 is configured to display the thumbnail by using a floating layer.

The information transmission module 104 is configured to send webpage information in the floating layer to the first mobile terminal.

The user may select a desired thumbnail in the floating layer for transmission, and after selecting the thumbnail, the user may trigger the information transmission module 104 to perform the information transmission. For example, a send key is provided in the floating layer, and the user clicks on the send key to trigger the plug-in to perform this step. The information transmission module 104 sends, according to a selection operation of the user on the thumbnail displayed in the floating layer, the thumbnail selected by the user and the address information of the current web page to the first mobile terminal. In specific implementation, a transmission process of the information transmission module 104 may include two feasible implementation manners. For the two feasible implementation manners, reference may be made to relevant description in step S104 shown in FIG. 1, which is not described here again.

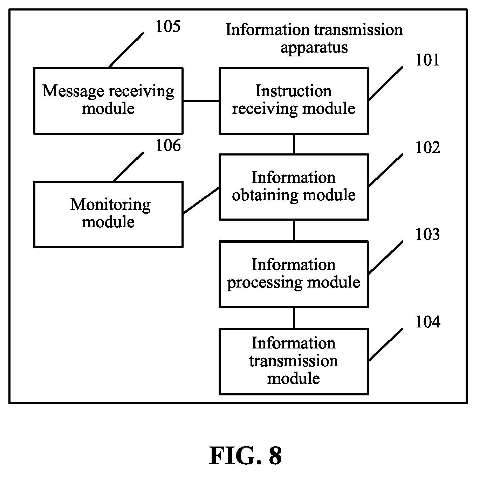

Referring to FIG. 8, FIG. 8 is a schematic structural diagram of another in information transmission apparatus according to an embodiment of the present invention. The information transmission apparatus may be a plug-in pre-installed in a browser of a second terminal. The apparatus may include an instruction receiving module 101, an information obtaining module 102, an information processing module 103, an information transmission module 104, a message receiving module 105, and a detecting module 106. For the instruction receiving module 101, the information obtaining module 102, the information processing module 103, and the information transmission module 104, reference may be made to relevant description in the embodiment shown in FIG. 6, which is not described here again.

The message receiving module 105 is configured to receive a second binding notification message delivered by a server, where the second binding notification message includes account information of the first mobile terminal bound to the plug-in.

The detecting module 106 is configured to monitor whether an information transmission instruction sent by a first mobile terminal bound to the apparatus is received within a preset time window, and if the information transmission instruction from the first mobile terminal is received in the preset time window, maintain in an activated state, and instruct the information obtaining module 102 to obtain webpage information of a current web page in a browser where the information transmission apparatus is located; if the information transmission instruction from the first mobile terminal is not received in the preset time window, enter a deactivated state according to a deactivation operation of the second terminal.

It should be noted that, functions of functional modules of the information transmission apparatus of the embodiment of the present invention may be specifically implemented according to the methods in the foregoing method embodiments. For a specific implementation process, reference may be made to relevant description of the foregoing method embodiments, which is not described here again.

In the embodiment of the present invention, the plug-in grabs, according to the information transmission instruction from the terminal bound to the plug-in, the webpage information of the current web page in the browser where the plug-in is located, processes the webpage information, and returns the processed webpage information to the terminal, so as to implement information transmission between the plug-in in the browser and the terminal that are bound to each other, thereby improving the convenience of information transmission.

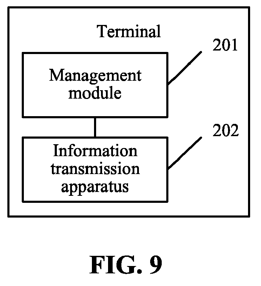

With reference to FIG. 9 to FIG. 10, a second terminal according to an embodiment of the present invention is described in detail below. It can be understood that, the second terminal can be applied in the methods shown in FIG. 1 to FIG. 5.

FIG. 9 is a schematic structural diagram of a terminal according to an embodiment of the present invention. The terminal may be the second terminal in the embodiment of the present invention, including a browser (not shown in FIG. 9). The terminal may include one or more processors for executing modules, programs and/or instructions stored in memory and thereby performing predefined operations; one or more network or other communications interfaces; and one or more communication buses for interconnecting these components. In some implementations, the terminal includes a user interface comprising a display device and one or more input devices (e.g., keyboard or mouse). In some implementations, the memory includes high-speed random access memory, such as DRAM, SRAM, or other random access solid state memory devices. In some implementations, memory includes non-volatile memory, such as one or more magnetic disk storage devices, optical disk storage devices, flash memory devices, or other non-volatile solid state storage devices. Memory, or alternately one or more storage devices (e.g., one or more nonvolatile storage devices) within memory, includes a non-transitory computer readable storage medium. In some implementations, memory or the computer readable storage medium of memory stores a management module 201 and an information transmission apparatus 202. The information transmission apparatus 202 may be the information transmission apparatus in any one of the embodiments shown in FIG. 6 to FIG. 8. For a structure of the information transmission apparatus 202, reference may be made relevant description of the embodiments shown in FIG. 6 to FIG. 8, which is not described here again.

The management module 201 is configured to load the information transmission apparatus 202 in the browser, and manage the information transmission apparatus 202.

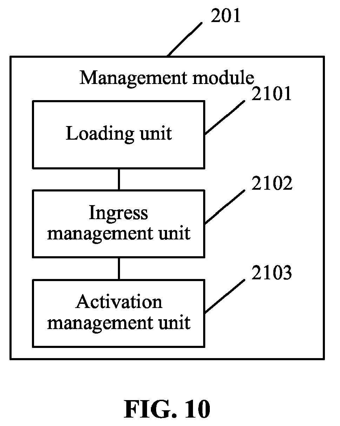

That the management module 201 manages the information transmission apparatus 202, and the management includes loading, ingress management, and activation management. Specifically, referring to FIG. 10 together, FIG. 10 is a schematic structural diagram of an embodiment of the management module shown in FIG. 9. The management module 201 may include a loading unit 2101, an ingress management unit 2102, and an activation management unit 2103.

The loading unit 2101 is configured to load the information transmission apparatus in the browser.

The ingress management unit 2102 is configured to generate a 2D barcode according to ingress information of the information transmission apparatus.

The activation management unit 2103 is configured to, after the information transmission apparatus and the first mobile terminal are bound to each other, activate the information transmission apparatus, or when an information transmission instruction from the first mobile terminal is not received by the information transmission apparatus in a preset time window, deactivate the information transmission apparatus.

It should be noted that, functions of functional modules of the second terminal of the embodiment of the present invention may be specifically implemented according to the methods in the foregoing method embodiments. For a specific implementation process, reference may be made to related description of the foregoing method embodiments, which is not described here again.

In the embodiment of the present invention, the plug-in grabs, according to the information transmission instruction from the terminal bound to the plug-in, the webpage information of the current web page in the browser where the plug-in is located, processes the webpage information, and returns the processed webpage information to the terminal, so as to implement information transmission between the plug-in in the browser and the terminal that are bound to each other, thereby improving the convenience of information transmission.

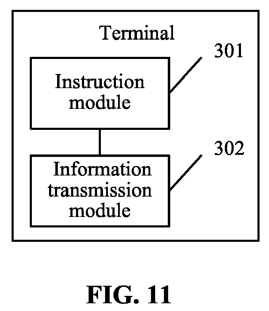

With reference to FIG. 11 to FIG. 13, a first mobile terminal according to an embodiment of the present invention is described in detail below. It can be understood that, the apparatus can be applied in the methods shown in FIG. 1 to FIG. 5.

Referring to FIG. 11, FIG. 11 is a schematic structural diagram of another terminal according to an embodiment of the present invention. The terminal may be the first mobile terminal of the embodiment of the present invention, namely, a terminal bound to a plug-in of a browser of a second terminal. The terminal may include one or more processors for executing modules, programs and/or instructions stored in memory and thereby performing predefined operations; one or more network or other communications interfaces; and one or more communication buses for interconnecting these components. In some implementations, the terminal includes a user interface comprising a display device and one or more input devices (e.g., keyboard or mouse). In some implementations, the memory includes high-speed random access memory, such as DRAM, SRAM, or other random access solid state memory devices. In some implementations, memory includes non-volatile memory, such as one or more magnetic disk storage devices, optical disk storage devices, flash memory devices, or other non-volatile solid state storage devices. Memory, or alternately one or more storage devices (e.g., one or more nonvolatile storage devices) within memory, includes a non-transitory computer readable storage medium. In some implementations, memory or the computer readable storage medium of memory stores an instruction module 301 and an information transmission module 302.

The instruction module 301 is configured to send an information transmission instruction to a plug-in bound to the terminal, so that the plug-in obtains, according to the information transmission instruction, webpage information of a current web page in a browser where the plug-in is located.

The formation of the information transmission instruction sent by the instruction module 301 may include three feasible implementation manners. For the implementation manners, reference may be made to relevant description in step S201 shown in FIG. 2, which is not described here again.

The information transmission module 302 is configured to receive webpage information sent by the plug-in through a floating layer.

The webpage information received by the transmission module 302 includes address information of the current web page of the browser where the plug-in is located and a thumbnail selected by the user.

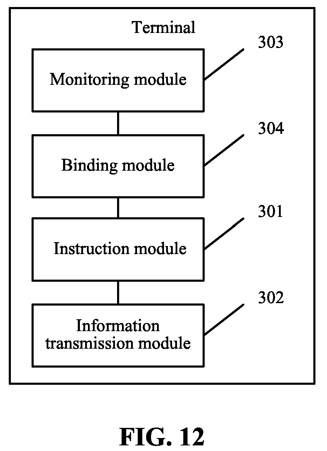

Referring to FIG. 12, FIG. 12 is a schematic structural diagram of still another terminal according to an embodiment of the present invention. The terminal may be the first mobile terminal of the embodiment of the present invention, namely, a terminal bound to a plug-in of a browser of a second terminal. The terminal may include one or more processors for executing modules, programs and/or instructions stored in memory and thereby performing predefined operations; one or more network or other communications interfaces; and one or more communication buses for interconnecting these components. In some implementations, the terminal includes a user interface comprising a display device and one or more input devices (e.g., keyboard or mouse). In some implementations, the memory includes high-speed random access memory, such as DRAM, SRAM, or other random access solid state memory devices. In some implementations, memory includes non-volatile memory, such as one or more magnetic disk storage devices, optical disk storage devices, flash memory devices, or other non-volatile solid state storage devices. Memory, or alternately one or more storage devices (e.g., one or more nonvolatile storage devices) within memory, includes a non-transitory computer readable storage medium. In some implementations, memory or the computer readable storage medium of memory stores an instruction module 301, an information transmission module 302, a detecting module 303, and a binding module 304. For structures of the instruction module 301 and the information transmission module 302, reference may be made to relevant description in the embodiment shown in FIG. 11, which is not described here again.

The detecting module 303 is configured to monitor a gravity sensing event, and instruct the instruction module to send an information transmission instruction to the plug-in according to the detected gravity sensing event; or monitor a voice control command, and send the information transmission instruction to the plug-in according to the voice control command; or monitor a predefined key pressing event, and send the information transmission instruction to the plug-in according to the detected predefined key pressing event.

The binding module 304 is configured to obtain ingress information of the plug-in, and interact with a server, so as to bind the terminal and the plug-in.

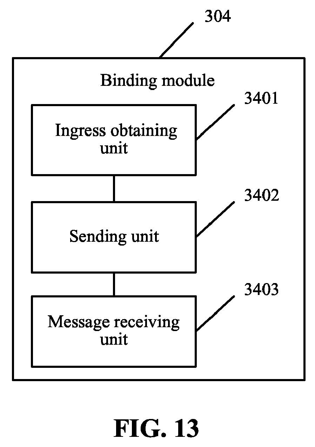

Referring to FIG. 13 together, FIG. 13 is a schematic structural diagram of an embodiment of the binding module shown in FIG. 12. The binding module 304 may include an ingress obtaining unit 3401, a sending unit 3402, and a message receiving unit 3403.

The ingress obtaining unit 3401 is configured to obtain ingress information of the plug-in by scanning a 2D barcode corresponding to the plug-in.

The sending unit 3402 is configured to send the ingress information of the plug-in and account information of the terminal to the server for binding.

The message receiving unit 3403 is configured to receive a first binding notification message delivered by the server, where the first binding notification message includes the ingress information of the plug-in bound to the first mobile terminal.

It should be noted that, functions of functional modules of the second terminal of the embodiment of the present invention may be specifically implemented according to the methods in the foregoing method embodiments. For a specific implementation process, reference may be made to related description of the foregoing method embodiments, which is not described here again.

In the embodiment of the present invention, the plug-in grabs, according to the information transmission instruction from the terminal bound to the plug-in, the webpage information of the current web page in the browser where the plug-in is located, processes the webpage information, and returns the processed webpage information to the terminal, so as to implement information transmission between the plug-in in the browser and the terminal that are bound to each other, thereby improving the convenience of information transmission.

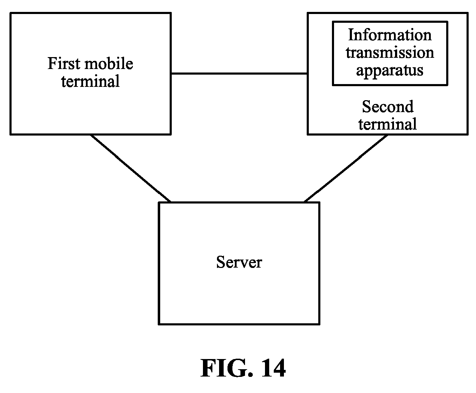

With reference to FIG. 14, an information transmission system according to an embodiment of the present invention is described in detail below. It can be understood that, the system can be applied in the methods shown in FIG. 1 to FIG. 5.

Referring to FIG. 14, FIG. 14 is a schematic structural diagram of an information transmission system according to an embodiment of the present invention. The system may include a first mobile terminal, a second terminal, and a server. The first mobile terminal may be the terminal in any one of the embodiments shown in FIG. 11 to FIG. 13. The second terminal may be the terminal shown in any one of the embodiments of FIG. 9 to FIG. 10. Furthermore, as shown in FIG. 14, a browser of the second terminal is loaded with the information transmission apparatus in any one of the embodiments shown in FIG. 6 to FIG. 8, and the apparatus may be a plug-in.

The server is configured to bind the first mobile terminal and the plug-in according to ingress information of the plug-in in the browser of the second terminal and account information of the first mobile terminal that are sent by the first mobile terminal, and deliver a first binding notification message to the first mobile terminal, and deliver a second binding notification message to the plug-in.

In the embodiment of the present invention, the plug-in grabs, according to the information transmission instruction from the terminal bound to the plug-in, the webpage information of the current web page in the browser where the plug-in is located, processes the webpage information, and returns the processed webpage information to the terminal, so as to implement information transmission between the plug-in in the browser and the terminal that are bound to each other, thereby improving the convenience of information transmission.

Persons of ordinary skill in the art should understand that all or a part of the processes of the methods in the embodiments may be implemented by a computer program instructing relevant hardware. The program may be stored in a computer readable storage medium. When the program is run, the processes of the method in the embodiments are performed. The storage medium may be a magnetic disk, an optical disk, a Read-Only Memory (Read-Only Memory, ROM), a Random Access Memory (Read-Only Memory, RAM), and the like.

Disclosed above are merely exemplary embodiments of the present invention rather than limiting the right scope of the present invention. Therefore, equal changes made according to claims of the present invention shall still belong to the scope covered by the present invention.

While particular embodiments are described above, it will be understood it is not intended to limit the invention to these particular embodiments. On the contrary, the invention includes alternatives, modifications and equivalents that are within the spirit and scope of the appended claims. Numerous specific details are set forth in order to provide a thorough understanding of the subject matter presented herein. But it will be apparent to one of ordinary skill in the art that the subject matter may be practiced without these specific details. In other instances, well-known methods, procedures, components, and circuits have not been described in detail so as not to unnecessarily obscure aspects of the embodiments.

Although the terms first, second, etc. may be used herein to describe various elements, these elements should not be limited by these terms. These terms are only used to distinguish one element from another. For example, first ranking criteria could be termed second ranking criteria, and, similarly, second ranking criteria could be termed first ranking criteria, without departing from the scope of the present invention. First ranking criteria and second ranking criteria are both ranking criteria, but they are not the same ranking criteria.

The terminology used in the description of the invention herein is for the purpose of describing particular embodiments only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, operations, elements, and/or components, but do not preclude the presence or addition of one or more other features, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Although some of the various drawings illustrate a number of logical stages in a particular order, stages that are not order dependent may be reordered and other stages may be combined or broken out. While some reordering or other groupings are specifically mentioned, others will be obvious to those of ordinary skill in the art and so do not present an exhaustive list of alternatives. Moreover, it should be recognized that the stages could be implemented in hardware, firmware, software or any combination thereof.

The foregoing description, for purpose of explanation, has been described with reference to specific implementations. However, the illustrative discussions above are not intended to be exhaustive or to limit the invention to the precise forms disclosed. Many modifications and variations are possible in view of the above teachings. The implementations were chosen and described in order to best explain principles of the invention and its practical applications, to thereby enable others skilled in the art to best utilize the invention and various implementations with various modifications as are suited to the particular use contemplated. Numerous specific details are set forth in order to provide a thorough understanding of the subject matter presented herein. But it will be apparent to one of ordinary skill in the art that the subject matter may be practiced without these specific details. In other instances, well-known methods, procedures, components, and circuits have not been described in detail so as not to unnecessarily obscure aspects of the implementations.

## Claims

1. An information transmission method performed at a first mobile terminal having a processor and memory for storing one or more programs to be executed by the processor, the method comprising:
initiating an information retrieval application at the first mobile terminal;
detecting (S410) a predefined user operation on the first mobile terminal to retrieve information from a web browser running on a second terminal, wherein the web browser includes a plug-in bound to a user account associated with the first mobile terminal;
in response to the predefined user operation, sending (S411) an information transmission instruction to the plug-in at the second terminal, wherein the plug-in is configured to process, (S415) according to the information transmission instruction, webpage information of a current web page in the web browser, and overlay the processed webpage information on top of the current web page in the web browser;
receiving (S416) at least a portion of the processed webpage information from the second terminal; and
displaying the received webpage information on a display of the first mobile terminal;
wherein the plug-in was pre-installed (S401) in the web browser and bound (S405) to the first mobile terminal before receiving the information transmission instruction from the first mobile terminal; the first mobile terminal and the plug-in in the web browser are configured to perform the following operations to be bounded together:
the first mobile terminal:
obtaining (S403) ingress information of the plug-in from the second terminal, wherein the ingress information comprises address information and identification information of the plug-in;
sending (S404) the ingress information of the plug-in and the user account information associated with the first mobile terminal to a user account binding server;
receiving (S406) a first binding notification message from the user account binding server, wherein the first binding notification message comprises the ingress information of the plug-in bound to the first mobile terminal; and
the plug-in receiving (S407) a second binding notification message from the user account binding server, wherein the second binding notification message comprises the user account information associated with the first mobile terminal bound to the plug-in.

2. The method according to claim 1, wherein the second terminal provides the ingress information of the plug-in to the first mobile terminal by:
generating a 2D barcode according to the ingress information of the plug-in; and
displaying the 2D barcode on a display of the second terminal so that the first mobile terminal can obtain the ingress information of the plug-in by scanning the 2D barcode.

3. The method according to claim 1, wherein, after being bound to the first mobile terminal, the plug-in is activated to receive the information transmission instruction from the first mobile terminal within a preset time window; if the information transmission instruction from the first mobile terminal is received within the preset time window, the plug-in is triggered to process the webpage information; and if the information transmission instruction from the first mobile terminal is not received within the preset time window, the plug-in is de-activated.

4. The method according to claim 1, wherein detecting the predefined user operation is one selected from the group consisting of:
detecting a gravity sensing event caused by a predefined user movement of the first mobile terminal, and sending an information transmission instruction to the plug-in according to the detected gravity sensing event; or
detecting a voice control command caused by a user of the first mobile terminal, and sending an information transmission instruction to the plug-in according to the detected voice control command; or
detecting a predefined key pressing event caused by a user of the first mobile terminal, and sending an information transmission instruction to the plug-in according to the detected predefined key pressing event.

5. The method according to any one of claims 1 to 4, wherein the webpage information comprises address information of the current web page and information of images in the current web page; and the processing of the webpage information by the plug-in further includes:
selecting images having a minimum side length larger than a preset value from the current web page, or images in a preset format from the current web page;
compressing the selected images to form a thumbnail image for each image; and
overlaying the thumbnail images on top of the current web page.

6. The method according to claim 5, wherein the second terminal transmits at least a portion of the processed webpage information to the first mobile terminal by:
receiving a user selection of at least a subset of the thumbnail images; and
sending the user-selected thumbnail images and the address information of the current web page to the first mobile terminal.

7. An information transmission method performed at a second terminal having a processor and memory for storing one or more programs to be executed by the processor, the method comprising:
activating (S408) a plug-in in a web browser at the second terminal, wherein the plug-in is bound to a user account associated with a first mobile terminal;
receiving an information transmission instruction from the first mobile terminal;
in response to the information transmission instruction, processing (S415) webpage information of a current web page in the web browser, and overlaying the processed webpage information on top of the current web page in the web browser; and
sending (S416) at least a portion of the processed webpage information to the first mobile terminal;
wherein the plug-in was pre-installed (S401) in the web browser and bound (S405) to the first mobile terminal before receiving (S412) the information transmission instruction from the first mobile terminal; the first mobile terminal and the plug-in in the web browser are configured to perform the following operations to be bounded together:
the first mobile terminal:
obtaining (S403) ingress information of the plug-in from the second terminal, wherein the ingress information comprises address information and identification information of the plug-in;
sending (S404) the ingress information of the plug-in and the user account information associated with the first mobile terminal to a user account binding server;
receiving (S406) a first binding notification message from the user account binding server, wherein the first binding notification message comprises the ingress information of the plug-in bound to the first mobile terminal; and
the plug-in receiving (S407) a second binding notification message from the user account binding server, wherein the second binding notification message comprises the user account information associated with the first mobile terminal bound to the plug-in.

8. The method according to claim 7, wherein the second terminal provides the ingress information of the plug-in to the first mobile terminal by:
generating a 2D barcode according to the ingress information of the plug-in; and
displaying the 2D barcode on a display of the second terminal so that the first mobile terminal can obtain the ingress information of the plug-in by scanning the 2D barcode.

9. The method according to claim 7, wherein, after being bound to the first mobile terminal, the plug-in is activated to receive the information transmission instruction from the first mobile terminal within a preset time window; if the information transmission instruction from the first mobile terminal is received within the preset time window, the plug-in is triggered to process the webpage information; and if the information transmission instruction from the first mobile terminal is not received within the preset time window, the plug-in is de-activated.

10. The method according to any one of claims 7 to 9, wherein the webpage information comprises address information of the current web page and information of images in the current web page; and the processing of the webpage information by the plug-in further includes:
selecting images having a minimum side length larger than a preset value from the current web page, or images in a preset format from the current web page;
compressing the selected images to form a thumbnail image for each image; and
overlaying the thumbnail images on top of the current web page.

11. The method according to claim 10, wherein the second terminal transmits at least a portion of the processed webpage information to the first mobile terminal by:
receiving a user selection of at least a subset of the thumbnail images; and
sending the user-selected thumbnail images and the address information of the current web page to the first mobile terminal.

12. A first mobile terminal, comprising:
one or more processors; and
memory storing one or more programs, wherein the one or more programs, when executed by the one or more processors, cause the first mobile terminal to:
initiate (S408) an information retrieval application at the first mobile terminal;
detect (S409) a predefined user operation on the first mobile terminal to retrieve information from a web browser running on a second terminal, wherein the web browser includes a plug-in bound to a user account associated with the first mobile terminal;
in response to the predefined user operation, send (S411) an information transmission instruction to the plug-in at the second terminal, wherein the plug-in is configured to process, (S415) according to the information transmission instruction, webpage information of a current web page in the web browser, and overlay the processed webpage information on top of the current web page in the web browser;
receive (S416) at least a portion of the processed webpage information from the second terminal; and
display the received webpage information on a display of the first mobile terminal;
wherein the first mobile terminal is configured to perform the following operations to be bounded to the plug-in:
obtaining (S403) ingress information of the plug-in from the second terminal, wherein the ingress information comprises address information and identification information of the plug-in;
sending (S404) the ingress information of the plug-in and the user account information associated with the first mobile terminal to a user account binding server; and
receiving (S406) a first binding notification message from the user account binding server, wherein the first binding notification message comprises the ingress information of the plug-in bound to the first mobile terminal.

13. The first mobile terminal according to claim 12, wherein the first mobile terminal detects the predefined user operation in one manner selected from the group consisting of:
detecting a gravity sensing event caused by a predefined user movement of the first mobile terminal, and sending an information transmission instruction to the plug-in according to the detected gravity sensing event; or
detecting a voice control command caused by a user of the first mobile terminal, and sending an information transmission instruction to the plug-in according to the detected voice control command; or
detecting a predefined key pressing event caused by a user of the first mobile terminal, and sending an information transmission instruction to the plug-in according to the detected predefined key pressing event.

## Patentansprüche

1. Informationsübertragungsverfahren, das von einem ersten mobilen Endgerät durchgeführt wird, welches einen Prozessor und einen Speicher zum Speichern eines oder mehrerer durch den Prozessor auszuführenden/auszuführender Programms/Programme umfasst, wobei das Verfahren umfasst:
Starten einer Informationsabfrageanwendung an dem ersten mobilen Endgerät;
Erfassen (S410) einer vorbestimmten Nutzeroperation an dem ersten mobilen Endgerät, um von einem auf einem zweiten Endgerät laufenden Webbrowser eine Information abzufragen, wobei der Webbrowser ein Zusatzprogramm umfasst, das an ein dem ersten mobilen Endgerät zugeordnetes Nutzerkonto gebunden ist;
in Reaktion auf die vorbestimmte Nutzeroperation, Senden (S411) eines Informationsübertragungsbefehls an das Zusatzprogramm auf dem zweiten Endgerät, wobei das Zusatzprogramm dazu eingerichtet ist, (S415) gemäß dem Informationsübertragungsbefehl eine Webseiteninformation einer aktuellen Webseite in dem Webbrowser zu weiterzuverarbeiten und die weiterverarbeitete Webseiteninformation der aktuellen Webseite in dem Webbrowser zu überlagern;
Empfangen zumindest eines Teils der weiterverarbeiteten Webseiteninformation von dem zweiten Endgerät; und
Anzeigen der empfangenen Webseiteninformation auf einer Anzeige des ersten mobilen Endgeräts;
wobei das Zusatzprogramm vor dem Empfang des Informationsübertragungsbefehls von dem ersten mobilen Endgerät in dem Webbrowser vorinstalliert (S401) und an das erste mobile Endgerät gebunden (S405) war; das erste mobile Endgerät und das Zusatzprogramm in dem Webbrowser dazu eingerichtet sind, die folgenden Operationen durchzuführen, um miteinander verbunden zu werden:
das erste mobile Endgerät:
Erhalten (S403) einer Zugangsinformation des Zusatzprogramms von dem zweiten Endgerät, wobei die Zugangsinformation eine Adressinformation und eine Identifikationsinformation des Zusatzprogramms umfasst;
Senden (S404) der Zugangsinformation des Zusatzprogramms und der dem ersten mobilen Endgerät zugeordneten Nutzerkontoinformation an einen Nutzerkontoverbindungsserver;
Empfangen (S406) einer ersten Verbindungsanzeigenachricht von dem Nutzerkontoverbindungsserver, wobei die erste Verbindungsanzeigenachricht die Zugangsinformation des an das erste mobile Endgerät gebundenen Zusatzprogramm umfasst; und
das Zusatzprogramm
Empfangen (S 407) einer zweiten Verbindungsanzeigenachricht von dem Nutzerkontoverbindungsserver, wobei die zweite Verbindungsanzeigenachricht die Nutzerkontoinformation umfasst, die dem an das Zusatzprogramm gebundenen ersten mobilen Endgerät zugeordnet ist.

2. Verfahren gemäß Anspruch 1, bei dem das zweite Endgerät dem ersten mobilen Endgerät die Eingangsinformation des Zusatzprogramms bereitstellt durch:
Erzeugen eines 2D-Barcodes gemäß der Zugangsinformation des Zusatzprogramms und
Anzeigen des 2D-Barcodes auf einem Display des zweiten Endgeräts, so dass das erste mobile Endgerät die Zugangsinformation des Zusatzprogramms durch Scannen des 2D-Barcodes erhalten kann.

3. Verfahren gemäß Anspruch 1, bei dem das Zusatzprogramm, nachdem es an das erste mobile Endgerät gebunden worden ist, aktiviert wird, um innerhalb eines festgelegten Zeitfensters den Informationsübertragungsbefehl von dem ersten mobilen Endgerät zu empfangen; wenn der Informationsübertragungsbefehl von dem ersten mobilen Endgerät innerhalb des festgelegten Zeitfensters empfangen wird, das Zusatzprogramm veranlasst wird, die Webseiteninformation weiterzuverarbeiten; und, wenn der Informationsübertragungsbefehl von dem ersten mobilen Endgerät nicht innerhalb des festgelegten Zeitfensters empfangen wird, das Zusatzprogramm deaktiviert wird.

4. Verfahren gemäß Anspruch 1, bei dem das Erfassen der vorbestimmten Nutzeroperation aus der folgenden Gruppe ausgewählt ist:
Erfassen eines Schwerkrafterfassungsereignisses, das durch eine vorbestimmte Nutzerbewegung des ersten mobilen Endgerät verursacht wird, und Senden eines Informationsübertragungsbefehls an das Zusatzprogramm gemäß dem erfassten Schwerkrafterfassungsereignis; oder
Erfassen eines Sprachsteuerungsbefehls, der durch einen Nutzer des ersten mobilen Endgeräts verursacht wird, und Senden eines Informationsübertragungsbefehls an das Zusatzprogramm gemäß dem erfassten Sprachsteuerungsbefehl; oder
Erfassen eines vorbestimmten Tastendruckereignisses, das durch einen Nutzer des ersten mobilen Endgeräts verursacht wird, und Senden eines Informationsübertragungsbefehls an das Zusatzprogramm gemäß dem erfassten Tastendruckereignis.

5. Verfahren gemäß einem der Ansprüche 1 bis 4, bei dem die Webseiteninformation eine Adressinformation der aktuellen Webseite und eine Bilderinformation in der aktuellen Webseite umfasst; und die Weiterverarbeitung der Webseiteninformation durch das Zusatzprogramm ferner umfasst:
Auswählen von Bildern, die eine minimale Seitenlänge haben, die größer ist als ein vorbestimmter Wert, von der aktuellen Webseite, oder von Bildern in einem festgelegten Format von der aktuellen Webseite;
Komprimieren der ausgewählten Bilder zur Bildung eines Miniaturbilds für jedes Bild; und
Überlagern der Miniaturbilder über die aktuelle Webseite.

6. Verfahren gemäß Anspruch 5, bei dem das zweite Endgerät zumindest einen Teil der weiterverarbeiteten Webseiteninformation an das erste mobile Endgerät überträgt durch:
Empfangen einer Nutzerauswahl zumindest einer Teilmenge der Miniaturbilder; und
Senden der von dem Nutzer ausgewählten Miniaturbilder und der Adressinformation der aktuellen Webseite an das erste mobile Endgerät.

7. Informationsübertragungsverfahren, das von einem zweiten Endgerät durchgeführt wird, welches einen Prozessor und einen Speicher zum Speichern eines oder mehrerer durch den Prozessor auszuführender Programme umfasst, wobei das Verfahren umfasst:
Aktivieren (S408) eines Zusatzprogramms in einem Webbrowser auf dem zweiten Endgerät, wobei das Zusatzprogramm an ein einem ersten mobilen Endgerät zugeordnetes Nutzerkonto gebunden ist;
Empfangen eines Informationsübertragungsbefehls von dem ersten mobilen Endgerät;
in Reaktion auf den Informationsübertragungsbefehl, Weiterverarbeiten (S415) einer Webseiteninformation einer aktuellen Webseite in dem Webbrowser und Überlagern der weiterverarbeiteten Webseiteninformation über die aktuelle Webseite in dem Webbrowser; und
Senden (S 416) zumindest eines Teils der weiterverarbeiteten Webseiteninformation an das erste mobile Endgerät;
wobei das Zusatzprogramm vor dem Empfang (S412) des Informationsübertragungsbefehls von dem ersten mobilen Endgerät in dem Webbrowser vorinstalliert (S401) und an das erste mobile Endgerät gebunden (S405) war; das erste mobile Endgerät und das Zusatzprogramm in dem Webbrowser dazu eingerichtet sind, die folgenden Operationen durchzuführen, um miteinander verbunden zu werden:
das erste mobile Endgerät:
Erhalten (S403) einer Zugangsinformation des Zusatzprogramms von dem zweiten Endgerät, wobei die Zugangsinformation eine Adressinformation und eine Identifikationsinformation des Zusatzprogramms umfasst;
Senden (S404) der Zugangsinformation des Zusatzprogramms und der dem ersten mobilen Endgerät zugeordneten Nutzerkontoinformation an einen Nutrerkontoverbindungsserver;
Empfangen (S406) einer ersten Verbindungsanzeigenachricht von dem Nutzerkontoverbindungsserver, wobei die erste Verbindungsanzeigenachricht die Zugangsinformation des an das erste mobile Endgerät gebundene Zusatzprogramm umfasst; und
das Zusatzprogramm
Empfangen (S 407) einer zweiten Verbindungsanzeigenachricht von dem Nutzerkontoverbindungsserver, wobei die zweite Verbindungsanzeigenachricht die Nutzerkontoinformation umfasst, die dem an das Zusatzprogramm gebundenen ersten mobilen Endgerät zugeordnet ist.

8. Verfahren gemäß Anspruch 7, bei dem das zweite Endgerät dem ersten mobilen Endgerät die Eingangsinformation des Zusatzprogramms bereitstellt durch:
Erzeugen eines 2D-Barcodes gemäß der Zugangsinformation des Zusatzprogramms und
Anzeigen des 2D-Barcodes auf einem Display des zweiten Endgeräts, so dass das erste mobile Endgerät die Zugangsinformation des Zusatzprogramms durch Scannen des 2D-Barcodes erhalten kann.

9. Verfahren gemäß Anspruch 7, bei dem das Zusatzprogramm, nachdem es an das erste mobile Endgerät gebunden worden ist, aktiviert wird, um innerhalb eines festgelegten Zeitfensters den Informationsübertragungsbefehl von dem ersten mobilen Endgerät zu empfangen; wenn der Informationsübertragungsbefehl von dem ersten mobilen Endgerät innerhalb des festgelegten Zeitfensters empfangen wird, das Zusatzprogramm veranlasst wird, die Webseiteninformation weiterzuverarbeiten; und, wenn der Informationsübertragungsbefehl von dem ersten mobilen Endgerät nicht innerhalb des festgelegten Zeitfensters empfangen wird, das Zusatzprogramm deaktiviert wird.

10. Verfahren gemäß einem der Ansprüche 7 bis 9, bei dem die Webseiteninformation eine Adressinformation der aktuellen Webseite und eine Bilderinformation in der aktuellen Webseite umfasst; und die Weiterverarbeitung der Webseiteninformation durch das Zusatzprogramm ferner umfasst:
Auswählen von Bildern, die eine minimale Seitenlänge haben, die größer ist als ein vorbestimmter Wert, von der aktuellen Webseite, oder von Bildern in einem festgelegten Format von der aktuellen Webseite;
Komprimieren der ausgewählten Bilder zur Bildung eines Miniaturbilds für jedes Bild; und
Überlagern der Miniaturbilder über die aktuelle Webseite.

11. Verfahren gemäß Anspruch 10, bei dem das zweite Endgerät zumindest einen Teil der weiterverarbeiteten Webseiteninformation an das erste mobile Endgerät überträgt durch:
Empfangen einer Nutzerauswahl zumindest einer Teilmenge der Miniaturbilder; und
Senden der von dem Nutzer ausgewählten Miniaturbilder und der Adressinformation der aktuellen Webseite an das erste mobile Endgerät.

12. Erstes mobiles Endgerät, das umfasst:
einen Prozessor oder mehrere Prozessoren;
einen Speicher zum Speichern eines Programms oder mehrerer Programme, wobei das Programm oder die mehreren Programme, wenn es/sie durch den Prozessor oder die mehreren Prozessoren ausgeführt wird/werden das erste mobile Endgerät zu den Schritten veranlassen:
Starten einer Informationsabfrageanwendung an dem ersten mobilen Endgerät;
Erfassen (S410) einer vorbestimmten Nutzeroperation an dem ersten mobilen Endgerät, um von einem auf einem zweiten Endgerät laufenden Webbrowser eine Information abzufragen, wobei der Webbrowser ein Zusatzprogramm umfasst, das an ein dem ersten mobilen Endgerät zugeordnetes Nutzerkonto gebunden ist;
in Reaktion auf die vorbestimmte Nutzeroperation, Senden (S411) eines Informationsübertragungsbefehls an das Zusatzprogramm auf dem zweiten Endgerät, wobei das Zusatzprogramm dazu eingerichtet ist, (S415) gemäß dem Informationsübertragungsbefehl eine Webseiteninformation einer aktuellen Webseite in dem Webbrowser zu weiterzuverarbeiten und die weiterverarbeitete Webseiteninformation der aktuellen Webseite in dem Webbrowser zu überlagern;
Empfangen zumindest eines Teils der weiterverarbeiteten Webseiteninformation von dem zweiten Endgerät; und
Anzeigen der empfangenen Webseiteninformation auf einer Anzeige des ersten mobilen Endgeräts;
wobei das erste mobile Endgerät dazu eingerichtet ist, die folgenden Operationen durchzuführen, um an das Zusatzprogramm gebunden zu werden;
Erhalten (S403) einer Zugangsinformation des Zusatzprogramms von dem zweiten Endgerät, wobei die Zugangsinformation eine Adressinformation und eine Identifikationsinformation des Zusatzprogramms umfasst;
Senden (S404) der Zugangsinformation des Zusatzprogramms und der dem ersten mobilen Endgerät zugeordneten Nutzerkontoinformation an einen Nutzerkontoverbindungsserver;
Empfangen (S406) einer ersten Verbindungsanzeigenachricht von dem Nutzerkontoverbindungsserver, wobei die erste Verbindungsanzeigenachricht die Zugangsinformation des an das erste mobile Endgerät gebundenen Zusatzprogramm umfasst.

13. Erstes mobiles Endgerät gemäß Anspruch 12, bei dem das erste mobile Endgerät die erste vorbestimmte Nutzeroperation in einer aus der folgenden Gruppe ausgewählten Art und Weise erfasst:
Erfassen eines Schwerkrafterfassungsereignisses, das durch eine vorbestimmte Nutzerbewegung des ersten mobilen Endgerät verursacht wird, und Senden eines Informationsübertragungsbefehls an das Zusatzprogramm gemäß dem erfassten Schwerkrafterfassungsereignis; oder
Erfassen eines Sprachsteuerungsbefehls, der durch einen Nutzer des ersten mobilen Endgeräts verursacht wird, und Senden eines Informationsübertragungsbefehls an das Zusatzprogramm gemäß dem erfassten Sprachsteuerungsbefehl; oder
Erfassen eines vorbestimmten Tastendruckereignisses, das durch einen Nutzer des ersten mobilen Endgeräts verursacht wird, und Senden eines Informationsübertragungsbefehls an das Zusatzprogramm gemäß dem erfassten Tastendruckereignis.

## Revendications

1. Procédé de transmission d'informations réalisé au niveau d'un premier terminal mobile comportant un processeur et une mémoire destinée à mémoriser un ou plusieurs programmes devant être exécutés par le processeur, le procédé comprenant les étapes consistant à :
lancer une application de recherche d'informations niveau du premier terminal mobile ;
détecter (S410) une opération utilisateur prédéfinie sur le premier terminal mobile pour rechercher des informations à partir d'un navigateur Web fonctionnant sur un deuxième terminal, dans lequel le navigateur Web comprend un module d'extension lié à un compte utilisateur associé avec le premier terminal mobile ;
en réponse à l'opération utilisateur prédéfinie, envoyer (S411) une instruction de transmission d'informations vers le module d'extension au niveau du deuxième terminal, dans lequel le module d'extension est configuré pour traiter (S415), conformément à l'instruction de transmission d'informations, des informations de page Web d'une page Web en cours dans le navigateur Web, et superposer les informations de page Web traitées en haut de la page Web en cours dans le navigateur Web ;
recevoir (S416) au moins une partie des informations de page Web traitées depuis le deuxième terminal ; et
afficher les informations de page Web reçues sur un affichage du premier terminal mobile ;
dans lequel le module d'extension a été préinstallé (S401) dans le navigateur Web et lié (S405) au premier terminal mobile avant de recevoir l'instruction de transmission d'informations depuis le premier terminal mobile ; le premier terminal mobile et le module d'extension dans le navigateur Web sont configurés pour réaliser les opérations suivantes devant être liées ensemble :
au niveau du premier terminal mobile :
obtenir (S403) des informations d'entrée du module d'extension à partir du deuxième terminal, dans lequel les informations d'entrée comprennent des informations d'adresse et des informations d'identification du module d'extension ;
envoyer (S404) les informations d'entrée du module d'extension et les informations de compte utilisateur associé au premier terminal mobile vers un serveur de liaison de compte utilisateur ;
recevoir (S406) un premier message de notification de liaison depuis le serveur de liaison de compte utilisateur, dans lequel le premier message de notification de liaison comprend les informations d'entrée du module d'extension lié au premier terminal mobile ; et
au niveau du module d'extension
recevoir (S407) un deuxième message de notification de liaison depuis le serveur de liaison de compte utilisateur, dans lequel le deuxième message de notification de liaison comprend les informations de compte utilisateur associé au premier terminal mobile lié au module d'extension.

2. Procédé selon la revendication 1, dans lequel le deuxième terminal délivre les informations d'entrée du module d'extension vers le premier terminal mobile en :
générant un code à barres bidimensionnel conformément aux informations d'entrée du module d'extension ; et
affichant le code à barres bidimensionnel sur un affichage du deuxième terminal de sorte que le premier terminal mobile peut obtenir les informations d'entrée du module d'extension en scannant le code à barres bidimensionnel.

3. Procédé selon la revendication 1, dans lequel, après avoir été lié au premier terminal mobile, le module d'extension est activé pour recevoir l'instruction de transmission d'informations depuis le premier terminal mobile à l'intérieur d'une fenêtre de temps préétablie ; si l'instruction de transmission d'informations provenant du premier terminal mobile est reçue à l'intérieur de la fenêtre de temps préétablie, le module d'extension est déclenché pour traiter les informations de page Web ; et si l'instruction de transmission d'informations provenant du premier terminal mobile n'est pas reçue à l'intérieur de la fenêtre de temps préétablie, le module d'extension est désactivé.

4. Procédé selon la revendication 1, dans lequel la détection de l'opération utilisateur prédéfinie correspond à l'une sélectionnée à partir du groupe composé des étapes suivantes consistant à :
détecter un événement de détection de gravité provoqué par un mouvement utilisateur prédéfini du premier terminal mobile, et envoyer une instruction de transmission d'informations vers le module d'extension conformément à l'événement de détection de gravité détecté ; ou
détecter une commande de commande vocale provoquée par un utilisateur du premier terminal mobile, et envoyer une instruction de transmission d'informations vers le module d'extension conformément à la commande de commande vocale détectée ; ou
détecter un événement d'enfoncement de touche prédéfinie provoqué par un utilisateur du premier terminal mobile, et envoyer une instruction de transmission d'informations vers le module d'extension conformément à l'événement d'enfoncement de touche prédéfinie détecté.

5. Procédé selon l'une quelconque des revendications 1 à 4, dans lequel les informations de page Web comprennent des informations d'adresse de la page Web en cours et des informations d'image dans la page Web en cours ; et le traitement des informations de page Web par le module d'extension comprend en outre les étapes consistant à :
sélectionner des images présentant une longueur latérale minimale supérieure à une valeur préétablie à partir de la page Web en cours, ou des images dans un format préétabli à partir de la page Web en cours ;
compresser les images sélectionnées pour former une image miniature pour chaque image ; et
superposer les images miniatures en haut de la page Web en cours.

6. Procédé selon la revendication 5, dans lequel le deuxième terminal transmet au moins une partie des informations de page Web traitées vers le premier terminal mobile en :
recevant une sélection utilisateur d'au moins un sous-ensemble des images miniatures ; et
envoyant les images miniatures sélectionnées par l'utilisateur et les informations d'adresse de la page Web en cours vers le premier terminal mobile.

7. Procédé de transmission d'informations réalisé au niveau d'un deuxième terminal comportant un processeur et une mémoire destinée à mémoriser un ou plusieurs programmes devant être exécutés par le processeur, le procédé comprenant les étapes consistant à :
activer (S408) un module d'extension dans un navigateur Web au niveau du deuxième terminal, dans lequel le module d'extension est lié à un compte utilisateur associé au premier terminal mobile ;
recevoir une instruction de transmission d'informations depuis le premier terminal mobile ;
en réponse à l'instruction de transmission d'informations, traiter (S415) les informations de page Web d'une page Web en cours dans le navigateur Web, et superposer les informations de page Web traitées en haut de la page Web en cours dans le navigateur Web ; et
envoyer (S416) au moins une partie des informations de page Web traitées vers le premier terminal mobile ;
dans lequel le module d'extension a été préinstallé (S401) dans le navigateur Web et lié (S405) au premier terminal mobile avant de recevoir (S412) l'instruction de transmission d'informations depuis le premier terminal mobile ; le premier terminal mobile et le module d'extension dans le navigateur Web sont configurés pour réaliser les opérations suivantes devant être liées ensemble consistant à :
au niveau du premier terminal mobile :
obtenir (S403) des informations d'entrée du module d'extension provenant du deuxième terminal, dans lequel les informations d'entrée comprennent des informations d'adresse et des informations d'identification du module d'extension ;
envoyer (S404) les informations d'entrée du module d'extension et les informations de compte utilisateur associé au premier terminal mobile vers un serveur de liaison de compte utilisateur ;
recevoir (S406) un premier message de notification de liaison depuis le serveur de liaison de compte utilisateur, dans lequel le premier message de notification de liaison comprend les informations d'entrée du module d'extension lié au premier terminal mobile ; et
au niveau du module d'extension
recevoir (S407) un deuxième message de notification de liaison du serveur de liaison de compte utilisateur, dans lequel le deuxième message de notification de liaison comprend les informations de compte utilisateur associé au premier terminal mobile lié au module d'extension.

8. Procédé selon la revendication 7, dans lequel le deuxième terminal délivre les informations d'entrée du module d'extension vers le premier terminal mobile en :
générant un code à barres bidimensionnel conformément aux informations d'entrée du module d'extension ; et
affichant le code à barres bidimensionnel sur un affichage du deuxième terminal de sorte que le premier terminal mobile peut obtenir les informations d'entrée du module d'extension en scannant le code à barres bidimensionnel.

9. Procédé selon la revendication 7, dans lequel, après avoir été lié au premier terminal mobile, le module d'extension est activé pour recevoir l'instruction de transmission d'informations depuis le premier terminal mobile à l'intérieur d'une fenêtre de temps préétablie ; si l'instruction de transmission d'informations provenant du premier terminal mobile est reçue à l'intérieur de la fenêtre de temps préétablie, le module d'extension est déclenché pour traiter les informations de page Web ; et si l'instruction de transmission d'informations provenant du premier terminal mobile n'est pas reçue à l'intérieur de la fenêtre de temps préétablie, le module d'extension est désactivé.

10. Procédé selon l'une quelconque des revendications 7 à 9, dans lequel les informations de page Web comprennent des informations d'adresse de la page Web en cours et des informations d'images dans la page Web en cours ; et le traitement des informations de page Web par le module d'extension comprend en outre les étapes consistant à :
sélectionner des images présentant une longueur latérale minimale supérieure à une valeur préétablie à partir de la page Web en cours, ou des images dans un format préétabli à partir de la page Web en cours ;
compresser les images sélectionnées pour former une image miniature pour chaque image ; et
superposer les images miniatures en haut de la page Web en cours.

11. Procédé selon la revendication 10, dans lequel le deuxième terminal transmet au moins une partie des informations de page Web traitées vers le premier terminal mobile en :
recevant une sélection utilisateur d'au moins un sous-ensemble des images miniatures ; et
envoyant les images miniatures sélectionnées par l'utilisateur et les informations d'adresse de la page Web en cours vers le premier terminal mobile.

12. Premier terminal mobile, comprenant :
un ou plusieurs processeurs ; et
une mémoire mémorisant un ou plusieurs programmes, dans laquelle le ou les plusieurs programmes, lorsqu'exécutés par le ou les plusieurs processeurs, amènent le premier terminal mobile à :
lancer (S408) une application de recherche d'information niveau du premier terminal mobile ;
détecter (S409) une opération utilisateur prédéfinie sur le premier terminal mobile pour rechercher des informations à partir d'un navigateur Web fonctionnant sur un deuxième terminal, dans lequel le navigateur Web comprend un module d'extension lié à un compte utilisateur associé au premier terminal mobile ;
en réponse à l'opération utilisateur prédéfinie, envoyer (S411) une instruction de transmission d'informations vers le module d'extension au niveau du deuxième terminal, dans lequel le module d'extension est configuré pour traiter (S415), conformément à l'instruction de transmission d'informations, des informations de page Web d'une page Web en cours dans le navigateur Web, et superposer les informations de page Web traitées en haut de la page Web en cours dans le navigateur Web ;
recevoir (S416) au moins une partie des informations de page Web traitées depuis le deuxième terminal ; et
afficher les informations de page Web reçues sur un affichage du premier terminal mobile ;
dans lequel le premier terminal mobile est configuré pour réaliser les opérations suivantes devant être liées au module d'extension, consistant à :
obtenir (S403) des informations d'entrée du module d'extension à partir du deuxième terminal, dans lequel les informations d'entrée comprennent des informations d'adresse et des informations d'identification du module d'extension ;
envoyer (S404) les informations d'entrée du module d'extension et les informations de compte utilisateur associé au premier terminal mobile vers un serveur de liaison de compte utilisateur ; et
recevoir (S406) un premier message de notification de liaison depuis le serveur de liaison de compte utilisateur, dans lequel le premier message de notification de liaison comprend les informations d'entrée du module d'extension lié au premier terminal mobile.

13. Premier terminal mobile selon la revendication 12, dans lequel le premier terminal mobile détecte l'opération utilisateur prédéfinie d'une manière sélectionnée à partir du groupe composé des étapes consistant à :
détecter un événement de détection de gravité provoqué par un mouvement utilisateur prédéfini du premier terminal mobile, et envoyer une instruction de transmission d'informations vers le module d'extension conformément à l'événement de détection de gravité détecté ; ou
détecter une commande de commande vocale provoquée par un utilisateur du premier terminal mobile, et envoyer une instruction de transmission d'informations vers le module d'extension conformément à la commande de commande vocale détectée ; ou
détecter un événement d'enfoncement de touche prédéfinie provoqué par un utilisateur du premier terminal mobile, et envoyer une instruction de transmission d'informations vers le module d'extension conformément à l'événement d'enfoncement de touche prédéfinie détecté.
